# EUROPEAN PATENT APPLICATION

(11) **EP 4 024 531 A1**
(43) Date of publication of application: **06.07.2022**
(21) Application number: 20903696.1
(22) Date of filing: 07.12.2020
(51) Int. Cl.: H01M 4/525, H01M 4/52, H01M 10/0525

(54) **POSITIVE ELECTRODE MATERIAL, PREPARATION METHOD THEREFOR AND APPLICATION THEREOF**

(30) Priority: 18.12.2019 CN 201911310399
(71) Applicant: SVOLT ENERGY TECHNOLOGY CO., LTD, Changzhou, Jiangsu 213200 (CN)
(72) Inventor: PAN, Hailong, hangzhou, Jiangsu 213200 (CN); BAI, Yan, hangzhou, Jiangsu 213200 (CN); WANG, Zhuang, hangzhou, Jiangsu 213200 (CN); ZHANG, Shutao, hangzhou, Jiangsu 213200 (CN)
(74) Representative: Novagraaf Technologies
(86) International application number: PCT/CN2020/134346
(87) International publication number: WO 2021/121066

(57) **Abstract**

Disclosed are a cathode electrode material and a preparation method and application thereof. A general formula thereof is LiₐNi_{1-x-y-z}CoₓMn_{y}Al_{z}M_{b}O₂, herein 1.04≤a≤1.08, 0.04≤x≤0.08, 0.025≤y≤0.06, 0.03≤z≤0.09, 0.015≤b≤0.06, and M is B and at least one selected from Zr, Al, Ti, Mg, Na, Ca, Nb, Ba, Si, P, W, and Sr. Compared with an existing nickel-cobalt-manganese-aluminum cathode electrode material, the cathode electrode material is doped with an M ion. Through the doping of the M ion, the content of a divalent nickel ion may be reduced, thereby the amount of the nickel ions that transit from a crystal plane (003) to a crystal plane (104) is reduced, and the degree of lithium-nickel mixing is reduced, so that the crystal structure of the cathode electrode material is stabilized, thereby the cycle retention rate and thermal stability of the material are improved, as to prolong service life of the material and improve the safety thereof.

## Description

### Technical Field

The present disclosure belongs to the technical field of lithium-ion batteries. Specifically, the present disclosure relates to a cathode electrode material and a preparation method and application thereof.

### Background

In recent years, with the rapid spread of electronic products such as a personal computer, a video camera, and a mobile phone, the development of batteries used as power sources thereof attracts the attention of people. In addition, in the automobile field, electric vehicles and hybrid vehicles attach great importance to the service life and safety performance of lithium-ion batteries. People continue to develop and research polycrystalline lithium-ion battery cathode electrode materials, such as LiNiO₃, ternary lithium nickel cobalt manganate and lithium nickel cobalt aluminate, but they have problems of poor cycle life and low thermal stability and the like, it does not meet the requirements of a long mileage, and there are many potential safety hazards. At the same time, for a high nickel cathode electrode material, as the nickel content is increased, the stability of the cathode electrode material is decreased, it is mainly manifested that the cycle performance is poor, and the thermal stability is poor and the like.

Therefore, the existing cathode electrode material need to be further improved.

### Summary

The present disclosure aims to solve one of technical problems in a related technology at least to a certain extent, such as the problems of poor cycleability and thermal stability. For this reason, a purpose of the present disclosure is to provide a cathode electrode material and a preparation method and application thereof. The cathode electrode material is low in content of a divalent nickel ion, low in degree of lithium-nickel mixing, stable in crystal structure, and higher in cycle retention rate and thermal stability, so the service life is prolonged and the safety is improved.

In one aspect of the present disclosure, the present disclosure provides a cathode electrode material. According to an embodiment of the present disclosure, a general formula of the cathode electrode material is LiₐNi_{1-x-y-z}CoₓMn_{y}Al_{z}M_{b}O₂, wherein 1.04≤a≤1.08, 0.04≤x≤0.08, 0.025≤y≤0.06, 0.03≤z≤0.09, 0.015≤b≤0.06, and M is B and at least one selected from Zr, Al, Ti, Mg, Na, Ca, Nb, Ba, Si, P, W, and Sr. Preferably, 0.028≤y≤0.06, preferably 0.04≤y≤0.06; preferably 1.04≤a≤1.05, preferably 0.075≤x≤0.08; preferably 0.03≤z≤0.04; and preferably 0.02≤b≤0.05.

According to the cathode electrode material of the embodiment of the present disclosure, compared with an existing nickel-cobalt-manganese-aluminum cathode electrode material, the cathode electrode material is doped with an M ion. Through the doping of the M ion, the content of the divalent nickel ion may be reduced, thereby the amount of the nickel ions that transit from a crystal plane (003) to a crystal plane (104) is reduced, and the degree of lithium-nickel mixing is reduced, so that the crystal structure of the cathode electrode material is stabilized, thereby the cycle retention rate and thermal stability of the material are improved, as to prolong the service life of the material and improve the safety thereof.

In addition, the cathode electrode material according to the above embodiment of the present disclosure may also have the following additional technical features:
In some embodiments of the present disclosure, the value range of the b is 0.02≤b≤0.03.

In some embodiments of the present disclosure, the cathode electrode material has a α-NaFeO₂-type layered structure similar to LiCoO₂, and the crystal type of the cathode electrode material belongs to an R-3m space group of a hexagonal crystal system.

In some embodiments of the present disclosure, a 2θ angle of the cathode electrode material on the crystal plane (003) is around 18.74 degrees, and preferably the 2θ angle of the cathode electrode material on the crystal plane (003) is 18.74±0.2 degrees, and a half-width of a diffraction peak of the cathode electrode material on the crystal plane (003) is 0.0550-0.0700.

In some embodiments of the present disclosure, a 2θ angle of the cathode electrode material on the crystal plane (104) is around 44.4 degrees, and preferably the 2θ angle of the cathode electrode material on the crystal plane (104) is 44.4±0.2 degrees, and the ratio of the half-width of the diffraction peak of the cathode electrode material on the crystal plane (003) to the half-width of the diffraction peak on the crystal plane (104) is 1.45-1.6.

In some embodiments of the present disclosure, the ratio of the diffraction peak intensity of the cathode electrode material on the crystal plane (003) to the diffraction peak intensity on the crystal plane (104) is 2.45≤I₀₀₃/I₁₀₄≤3.05.

Further, the above M is B and at least one selected from Zr, Al, and W, preferably M is a combination of B, Zr, and Al, or a combination of B, Zr, Al, and W.

In another aspect of the present disclosure, the present disclosure provides a method for preparing the above cathode electrode material, according to an embodiment of the present disclosure, the method includes the following operations:

After a cathode electrode precursor material is mixed with a boron source dopant, pre-burning is performed.

A pre-burned product is mixed with a lithium source and other dopants, wherein the other dopants are substances containing at least one of ion sources selected from Zr, Al, Ti, Mg, Na, Ca, Nb, Ba, Si, P, W, and Sr.

A mixed product is calcined, and water-washing and drying are performed on a calcined product.

After a dried product is mixed with an aluminum source coating agent and a boron source coating agent, heat treatment is performed, as to obtain the cathode electrode material.

According to the method for preparing the cathode electrode material according to the embodiment of the present disclosure, the pre-burning is performed after the cathode electrode precursor material is mixed with the boron source dopant, it is possible to obtain a precursor material with more orderly grain size growth direction, and greater specific surface area and strength, and at the same time, it is beneficial to the deintercalation of lithium; the calcining is performed after the pre-burned product, namely a pre-burned precursor, is mixed with the lithium source and the dopant, the lithium source and the dopant are more easily reacted with the pre-burned product, namely the pre-burned precursor, to obtain a pure single-crystal quaternary cathode electrode material instead of a single-crystal-like material, and the residual lithium of the material may be reduced after the water-washing; and further, through a dry method, the heat treatment is performed after the dried product is uniformly mixed with the aluminum source coating agent and the boron source coating agent, and in the heat treatment process, the boron source acts as a fluxing agent, so that the surface of the cathode electrode material is uniformly coated by the aluminum source, to obtain the cathode electrode material with higher cycle retention rate and thermal stability, longer service life and higher safety.

In addition, the method for preparing the cathode electrode material according to the above embodiment of the present disclosure may also have the following additional technical features.

In some embodiments of the present disclosure, the cathode electrode precursor material is selected from at least one of Ni_{1-x-y-z}CoₓMn_{y}Al_{z}(OH)₂, and Ni_{1-x-y-z}CoₓMn_{y}Al_{z}CO₃, herein 0.04≤x≤0.08, 0.04≤y≤0.06, 0.03≤z≤0.09; preferably 0.03≤y≤0.06, and further preferably 0.04≤y≤0.06.

In some embodiments of the present disclosure, the boron source dopant and the boron source coating agent are independently selected from at least one of B₂O₃ and H₃BO₃ respectively.

In some embodiments of the present disclosure, the mass ratio of the cathode electrode precursor material to the boron source dopant is 1:0.001-0.002.

In some embodiments of the present disclosure, the pre-burning temperature is 900-1000°C, and the pre-burning time is 10-15 h.

In some embodiments of the present disclosure, the mass ratio of the pre-burned product to the lithium source and the other dopants is 480:260-280:1-10.

In some embodiments of the present disclosure, the lithium source is selected from at least one of LiOH and Li₂CO₃

In some embodiments of the present disclosure, the other dopants are substances containing at least one of ion sources selected from Zr, Al, Ti, Mg, Na, Ca, Nb, Ba, Si, P, W and Sr.

In some embodiments of the present disclosure, the dopant is selected from at least one of Zr(OH)₄, ZrO₂, Al₂O₃, TiO₂, Mg(OH)₂, NaCl, CaCI2, Nb₂O₅, BaCI2, SiO₂, H₃PO₃, WO₃ and SrO.

In some embodiments of the present disclosure, the calcining temperature is 830-880°C, and the time is 12-17 h.

In some embodiments of the present disclosure, the mass ratio of the dried product to the aluminum source coating agent and the boron source coating agent is 1:0.001-0.003:0.0015-0.007.

In some embodiments of the present disclosure, the aluminum source coating agent is selected from at least one of Al₂O₃, Al(OH)₃, and AlF₃.

In some embodiments of the present disclosure, the temperature of the heat treatment is 400-600°C, and the heat treatment time is 6-8 h.

In another aspect of the present disclosure, the present disclosure provides a lithium-ion battery, according to an embodiment of the present disclosure, the lithium-ion battery has the above cathode electrode material or the cathode electrode material prepared by using the above method for preparing the cathode electrode material. According to the lithium-ion battery of the embodiment of the present disclosure, because the lithium-ion battery has the above cathode electrode material, the cathode electrode material is doped with the M ion, the content of the divalent nickel ion thereof may be reduced, thereby the amount of the nickel ions that transit from the crystal plane (003) to the crystal plane (104) is reduced, and the degree of lithium-nickel mixing in the cathode electrode material is reduced, so that the crystal structure of the cathode electrode material is stabilized, and it is beneficial to improve the cycle retention rate and thermal stability of the lithium-ion battery, prolong the service life of the battery and improve the safety thereof.

In a fourth aspect of the present disclosure, the present disclosure provides an automobile, according to an embodiment of the present disclosure, the automobile has the above lithium-ion battery. According to the automobile of the embodiment of the present disclosure, because the automobile has the above lithium-ion battery, in the case that the above lithium-ion battery has the higher cycle retention rate, thermal stability, service life and safety, the automobile may satisfy the requirements of a long mileage, and may significantly reduce potential safety hazards.

The additional aspects and advantages of the present disclosure are partially given in the following descriptions, and some may become apparent from the following descriptions, or be understood through the practice of the present disclosure.

### Brief Description of the Drawings

The above and/or additional aspects and advantages of the present disclosure may become apparent and easy to understand from descriptions of embodiments in combination with the following drawings, herein:
Fig. 1 is a flow schematic diagram of a method for preparing a cathode electrode material according to an embodiment of the present disclosure.
Fig. 2 shows a corrected X-Ray Diffraction (XRD) spectrum of a cathode electrode material obtained in Embodiment 1.
Fig. 3 shows a corrected XRD spectrum of a cathode electrode material obtained in Embodiment 4.
Fig. 4 shows a corrected XRD spectrum of a cathode electrode material obtained in Embodiment 6.
Fig. 5 shows a corrected XRD spectrum of a cathode electrode material obtained in Embodiment 8.
Fig. 6 shows a corrected XRD spectrum of a cathode electrode material obtained in Embodiment 9.
Fig. 7 shows a corrected XRD spectrum of a cathode electrode material obtained in Contrast example 1.

### Detailed Description of the Embodiments

It should be noted that embodiments in the present application and features in the embodiments may be combined with each other in the case without conflicting. The present disclosure is described in detail below with reference to the drawings and in combination with the embodiments.

The embodiments of the present disclosure are described in detail below. Examples of the embodiments are shown in the drawings, in which the same or similar reference signs indicate the same or similar elements or the elements with the same or similar functions. The embodiments described below with reference to the drawings are exemplary, and are intended to explain the present disclosure, but should not be construed as limiting the present disclosure.

In one aspect of the present disclosure, the present disclosure provides a cathode electrode material. According to an embodiment of the present disclosure, a general formula of the cathode electrode material is LiₐNi_{1-x-y-z}CoₓMn_{y}Al_{z}M_{b}O₂, wherein 1.04≤a≤1.08, 0.04≤x≤0.08, 0.025≤y≤0.06 (preferably 0.03≤y≤0.06, and further preferably 0.04≤y≤0.06), 0.03≤z≤0.09, 0.015≤b≤0.06, preferably 0.02≤b≤0.03, and M is B and at least one selected from Zr, Al, Ti, Mg, Na, Ca, Nb, Ba, Si, P, W, and Sr. It is found by the inventor that compared with an existing nickel-cobalt-manganese-aluminum cathode electrode material, the cathode electrode material is doped with an M ion. Through the doping of the M ion, the content of a divalent nickel ion may be reduced, thereby the amount of the nickel ions that transit from a crystal plane (003) to a crystal plane (104) is reduced, and the degree of lithium-nickel mixing is reduced, so that the crystal structure of the cathode electrode material is stabilized, thereby the cycle retention rate and thermal stability of the material are improved, as to prolong the service life of the material and improve the safety thereof.

Further, preferably 0.028≤y≤0.06, preferably 0.04≤y≤0.06; preferably 1.04≤a≤1.05, preferably 0.075≤x≤0.08; preferably 0.03≤z≤0.04; and preferably 0.02≤b≤0.05. a may be 1.04/1.05/1.06/1.07/1.08, x may be 0.04/0.05/0.06/0.07/0.08, y may be 0.04/0.05/0.06, z may be 0.03/0.04/0.05/0.06/0.07/0.08/0.09, and b may be 0.015/0.02/0.03/0.04/0.05/0.06. It is found by the inventor that if the a is too low, the material capacity and cycle performance are relatively low, and if the a is too high, residual alkali of the material is relatively high, so the stability of slurry during later homogenization is affected; if the x is too low, the layered structure of the material may be affected, and if the x is too high, it may be caused that the actual capacity is reduced and the material cost is increased; if the y is too low, the safety performance and structural stability of the material may be decreased, and if the y is too high, the layered structure of the material may be destroyed, so that the specific capacity of the material is reduced; if the z is too low, the thermal stability of the material is poor, and if the z is too high, the material capacity is relatively low; and if the b is too low, the cycle and thermal stability of the material are relatively poor, and if the b is too high, the cycle and thermal stability of the material are also relatively poor.

Further, the above cathode electrode material has a α-NaFeO₂-type layered structure similar to LiCoO₂, and the crystal type of the cathode electrode material belongs to an R-3m space group of a hexagonal crystal system.

Further, a 2θ angle of the cathode electrode material on the crystal plane (003) is around 18.74 degrees, and preferably the 2θ angle of the cathode electrode material on the crystal plane (003) is 18.74±0.2 degrees, and a half-width of a diffraction peak of the cathode electrode material on the crystal plane (003) is 0.0550-0.0700. It is found by the inventor that if the half-width peak value is too high, it is indicated that the grain size of the material is relatively small, and the degree of deviation from a complete crystal is greater, namely the crystallinity is poor; and if the half-width peak value is too low, it is indicated that the material is relatively poor in capacity under a large current. The material within the above range is moderate in grain size, and excellent in electrical performance.

Further, a 2θ angle of the cathode electrode material on the crystal plane (104) is around 44.4 degrees, and preferably the 2θ angle of the cathode electrode material on the crystal plane (104) is 44.4±0.2 degrees, and the ratio of the half-width of the diffraction peak of the cathode electrode material on the crystal plane (003) to the half-width of the diffraction peak on the crystal plane (104) is 1.45-1.6. It is found by the inventor that the material within this range is good in crystallization performance, and thus the thermal stability is also good.

Further, the ratio of the diffraction peak intensity of the cathode electrode material on the crystal plane (003) to the diffraction peak intensity on the crystal plane (104) is 2.45≤I₀₀₃/I₁₀₄≤3.05. It is found by the inventor that the I₀₀₃/I₁₀₄ value may be used to determine the degree of lithium-nickel mixing in the cathode electrode material. If the value is too low, the lithium-nickel mixing is serious, the layered structure of the material is unstable, and the electrical performance is relatively poor. While the value is within the above range, the lithium-nickel mixing is lower, it is indicated that the structure of the cathode electrode material is more stable.

Further, the above M is B and at least one selected from Zr, Al, and W, preferably M is a combination of B, Zr, and Al or a combination of B, Zr, Al, and W. According to the cathode electrode material of the embodiment of the present disclosure, compared with an existing nickel-cobalt-manganese-aluminum cathode electrode material, the cathode electrode material is doped with an M ion. Through the doping of the M ion, the content of a divalent nickel ion may be reduced, thereby the amount of the nickel ions that transit from a crystal plane (003) to a crystal plane (104) is reduced, and the degree of lithium-nickel mixing is reduced, so that the crystal structure of the cathode electrode material is stabilized, thereby the cycle retention rate and thermal stability of the material are improved, as to prolong the service life of the material and improve the safety thereof.

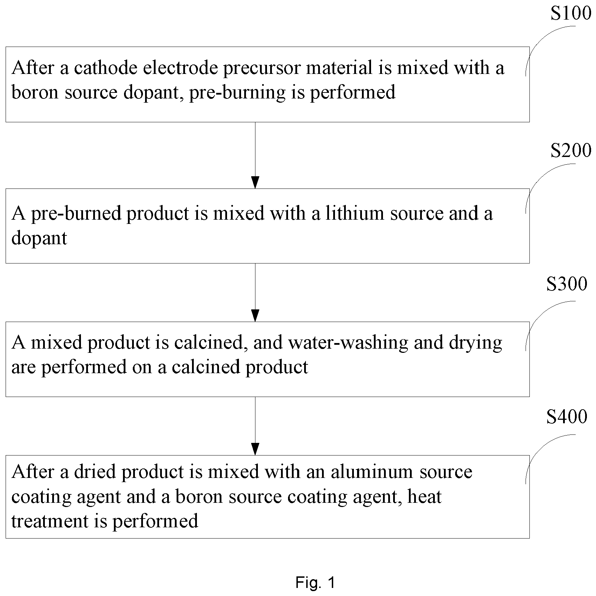

In another aspect of the present disclosure, the present disclosure provides a method for preparing the above cathode electrode material, according to an embodiment of the present disclosure, referring to Fig. 1, the method includes:

S100: after a cathode electrode precursor material is mixed with a boron source dopant, pre-burning is performed.

In this step, after the cathode electrode precursor material is mixed with the boron source dopant, the pre-burning is performed, as to obtain a pre-burned product. It is found by the inventor that after the cathode electrode precursor material is mixed with the boron source dopant, a precursor material with more orderly grain size growth direction, and greater specific surface area and strength may be obtained by pre-burning, and at the same time, it is beneficial to the deintercalation of lithium. According to an embodiment of the present disclosure, the specific types of the cathode electrode precursor material and the boron source dopant are not particularly limited, and those skilled in the art may choose according to actual needs. For example, the cathode electrode precursor material may be selected from at least one of Ni_{1-x-y-z}CoₓMn_{y}Al_{z}(OH)₂, and Ni_{1-x-y-z}CoₓMn_{y}Al_{z}CO₃, wherein 0.04≤x≤0.08, 0.04≤y≤0.06, 0.03≤z≤0.09 (preferably 0.03≤y≤0.06, and further preferably 0.04≤y≤0.06); and the boron source dopant may be selected from at least one of B₂O₃ and H₃BO₃. Further, the mass ratio of the cathode electrode precursor material to the boron source dopant is also not particularly limited, and may be 1:0.001-0.002, for example. It is found by the inventor that the introduction of the boron source dopant may increase an internal lattice of the cathode electrode precursor material, and it is easier for a lithium salt to enter and form a single crystal. If the value is too high, the content of the boron source dopant is too small, and the expected doping effect is not achieved. If the value is too low, the content of the boron source dopant is too much, a part of the boron source may be mixed into the material. According to another embodiment of the present disclosure, the specific conditions of the pre-burning are also not particularly limited, and those skilled in the art may choose according to actual needs. For example, the temperature of the pre-burning may be 900-1000°C, and the time may be 10-15 h. It is found by the inventor that if the pre-burning temperature is above 1000°C, particles may be too large and the material capacity may be low; and if the burning time is too short, it may be caused that the crystallization performance of the material is poor, the thermal stability is poor, the time is too long and the cost is increased.

S200: a pre-burned product is mixed with a lithium source and a dopant.

In this step, the pre-burned product is mixed with the lithium source and the dopant, as to obtain the mixed product. According to an embodiment of the present disclosure, the specific types of the lithium source and the dopant are not particularly limited, and those skilled in the art may choose according to actual needs. For example, the lithium source may be selected from at least one of LiOH and Li₂CO₃; and the dopant may be a substance containing at least one of ion sources selected from Zr, Al, Ti, Mg, Na, Ca, Nb, Ba, Si, P, W, and Sr. Specifically, the dopant may be selected from at least one of Zr(OH)₄, ZrO₂, Al₂O₃, TiO₂, Mg(OH)₂, NaCl, CaCl₂, Nb₂O₅, BaCl₂, SiO₂, H₃PO₃, WO₃, and SrO. Further, the mass ratio of the pre-burned product to the lithium source and the dopant is also not particularly limited, for example, it may be 480:260-280:1-10.

S300: a mixed product is calcined, and water-washing and drying are performed on a calcined product.

In this step, the mixed product is calcined, and the calcined product is water-washed and dried, as to obtain a dried product. It is found by the inventor that the lithium source and the dopant are easier to react with the pre-burned product, namely the pre-burned precursor, to obtain a pure single-crystal quaternary cathode electrode material, rather than a single-crystal-like material, and the residual lithium of the material may be reduced after water-washing. According to an embodiment of the present disclosure, the specific conditions of calcining are not particularly limited, and those skilled in the art may choose according to actual needs. For example, the temperature of calcining may be 830-880°C, and the time may be 12-17 h. It is found by the inventor that if the temperature is too low and the time is too short, the crystallinity of the material is poor, and the electrical performance of the material is affected; and if the temperature is too high, the size of the single-crystal may be increased, it may also have an adverse effect, and if the time is too long, the cost is increased.

S400: after a dried product is mixed with an aluminum source coating agent and a boron source coating agent, heat treatment is performed.

After the dried product is mixed with the aluminum source coating agent and the boron source coating agent, the heat treatment is performed, as to obtain the cathode electrode material. It is found by the inventor found that through a dry method, the heat treatment is performed after the dried product is uniformly mixed with the aluminum source coating agent and the boron source coating agent, and in the heat treatment process, the boron source acts as a fluxing agent, so that the surface of the cathode electrode material is uniformly coated by the aluminum source. According to an embodiment of the present disclosure, the specific types of the aluminum source coating agent and the boron source coating agent are not particularly limited, and those skilled in the art may choose according to actual needs. For example, the aluminum source coating agent may be selected from at least one of Al₂O₃, Al(OH)₃ and AlF₃; and the boron source coating agent may be selected from at least one of B₂O₃ and H₃BO₃, and it should be noted that the specific type of the boron source coating agent in this step may be the same as or different from that of the boron source dopant in S100, and those skilled in the art may choose according to actual needs. Further, the mass ratio of the dried product to the aluminum source coating agent and the boron source coating agent is not particularly limited, and may be 1:0.001-0.003:0.0015-0.007, for example. It is found by the inventor found that if the coating agent is too small, a coating layer (the coating layer here is not a clear physical coating structure, but aluminum and boron are uniformly doped with elements in the cathode electrode material on the surface) may not be formed, thereby a side reaction of the material and electrolyte may not be prevented; and if the coating agent is too much, the conductivity of the material may be greatly reduced, thereby the electrical performance is affected. According to another embodiment of the present disclosure, the specific conditions of the heat treatment are not particularly limited, and those skilled in the art may choose according to actual needs. For example, the temperature of the heat treatment may be 400-600°C., and the time may be 6-8 h. It is found by the inventor that if the temperature is too low, the boron source may not become a molten state, the coating effect is poor, and if the temperature is too high, the coating agent may enter the material; and if the time is too short, the reaction is insufficient, the coating layer may not be formed, and if the time is too long, the cost is increased.

In addition, since the amount of the boron source and aluminum source used in the last step of coating is very small, it basically does not affect the set content of the dopant, or the compositions of the cathode electrode material obtained by the preparation method of the present application basically correspond to the element ratio of a raw material design.

According to the method for preparing the cathode electrode material according to the embodiment of the present disclosure, the pre-burning is performed after the cathode electrode precursor material is mixed with the boron source dopant, it is possible to obtain a precursor material with more orderly grain size growth direction, and greater specific surface area and strength, and at the same time, it is beneficial to the deintercalation of lithium; the calcining is performed after the pre-burned product, namely a pre-burned precursor, is mixed with the lithium source and the dopant, the lithium source and the dopant are more easily reacted with the pre-burned product, namely the pre-burned precursor, to obtain a pure single-crystal quaternary cathode electrode material instead of a single-crystal-like material, and the residual lithium of the material may be reduced after the water-washing; and further, through a dry method, the heat treatment is performed after the dried product is uniformly mixed with the aluminum source coating agent and the boron source coating agent, and in the heat treatment process, the boron source acts as a fluxing agent, so that the surface of the cathode electrode material is uniformly coated by the aluminum source, to obtain the cathode electrode material with higher cycle retention rate and thermal stability, longer service life and higher safety. It should be noted that the characteristics of the above cathode electrode material are also applicable to the method for preparing the cathode electrode material, it is not repeatedly described here.

In another aspect of the present disclosure, the present disclosure provides a lithium-ion battery. According to an embodiment of the present disclosure, the lithium-ion battery has the above cathode electrode material or the cathode electrode material prepared by using the above method for preparing the cathode electrode material. According to the lithium-ion battery of the embodiment of the present disclosure, because the lithium-ion battery has the above cathode electrode material, the cathode electrode material is doped with the M ion, the content of the divalent nickel ion thereof may be reduced, thereby the amount of the nickel ions that transit from the crystal plane (003) to the crystal plane (104) is reduced, and the degree of lithium-nickel mixing in the cathode electrode material is reduced, so that the crystal structure of the cathode electrode material is stabilized, and it is beneficial to improve the cycle retention rate and thermal stability of the lithium-ion battery, prolong the service life of the battery and improve the safety thereof. It should be noted that the characteristics of the above cathode electrode material or the cathode electrode material prepared by the above method for preparing the cathode electrode material are also applicable to the lithium-ion battery, and it is not repeatedly described here.

In a fourth aspect of the present disclosure, the present disclosure provides an automobile. According to an embodiment of the present disclosure, the automobile has the above lithium-ion battery. According to the automobile of the embodiment of the present disclosure, because the automobile has the above lithium-ion battery, in the case that the above lithium-ion battery has the higher cycle retention rate, thermal stability, service life and safety, the automobile may satisfy the requirements of a long mileage, and may significantly reduce potential safety hazards. It should be noted that the characteristics of the above lithium-ion battery are also applicable to the automobile, and it is not repeatedly described here.

The present disclosure is described below with reference to specific embodiments. It should be noted that these embodiments are only descriptive, and do not limit the present disclosure in any way. XRD test devices of the following embodiments and contrast examples are all the German Bruker D8ADVANCE, and X-ray diffraction analysis is performed at a room temperature (T=298K). Experimental conditions: a working voltage is 40 KW, a working current is 40 mA, a step length is 0.02 degrees/step, and each step of scan time is 2 seconds.

### Embodiment 1

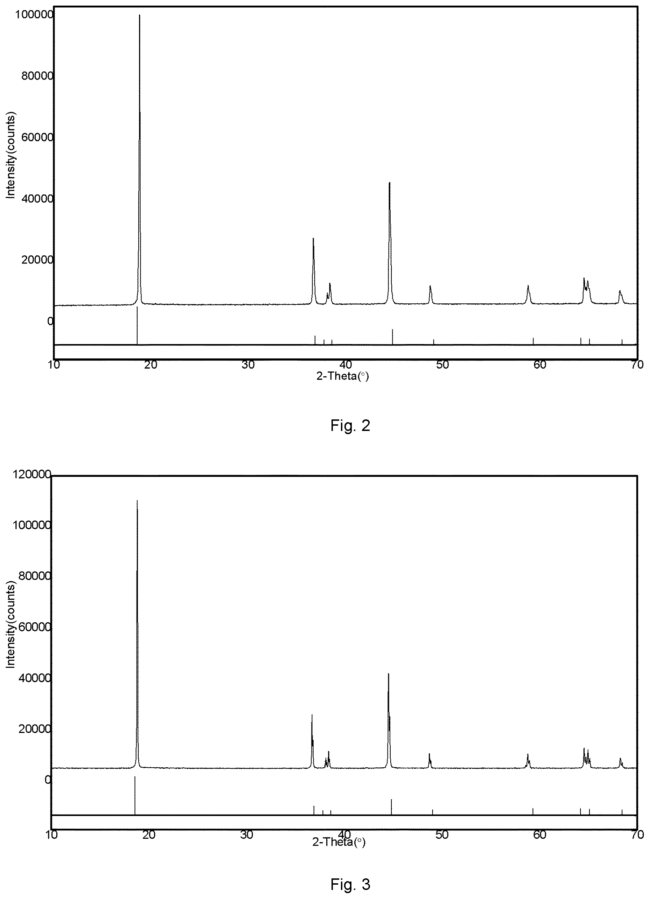

After a cathode electrode precursor material Ni_{0.85}Co_{0.08}Mn_{0.03}Al_{0.04}(OH)₂ is mixed with a boron source dopant B₂O₃ according to the mass ratio of 1:0.0015, pre-burning is performed at 900°C for 10 h, to obtain a pre-burned product; the pre-burned product is mixed with a lithium source LiOH and a dopant Al₂O₃ according to the mass ratio of 480:260:3.84, to obtain a mixed product; the mixed product is calcined at 830°C for 12 h, and a calcined product is water-washed and dried, to obtain a dried product; after the dried product is mixed with an aluminum source coating agent Al₂O₃ and a boron source coating agent B₂O₃ according to the mass ratio of 1:0.0012:0.0015, heat treatment is performed at 400°C for 6 h, to obtain a cathode electrode material Li_{1.05}Ni_{0.834}Co_{0.079}Mn_{0.03}Al_{0.04}B_{0.008}Al_{0.012}, in the cathode electrode material, based on the quality of the cathode electrode material, the doping amount of Al detected by Inductive Coupled Plasma (ICP) is shown in Table 1, and Fig. 2 shows a corrected XRD spectrum of the obtained cathode electrode material. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25° C and the Differential Scanning Calorimetry (DSC) test temperature thereof are shown in Table 2.

### Embodiment 2

After a cathode electrode precursor material Ni_{0.85}Co_{0.08}Mn_{0.03}Al_{0.04}(OH)₂ is mixed with a boron source dopant B₂O₃ according to the mass ratio of 1:0.0015, pre-burning is performed at 900°C for 10 h, to obtain a pre-burned product; the pre-burned product is mixed with a lithium source LiOH and dopants Al₂O₃ and Zr(OH)₄ according to the mass ratio of 480:260:3.84:3.52, to obtain a mixed product; the mixed product is calcined at 830°C for 12 h, and a calcined product is water-washed and dried, to obtain a dried product; after the dried product is mixed with an aluminum source coating agent Al₂O₃ and a boron source coating agent B₂O₃ according to the mass ratio of 1:0.0012:0.0015, heat treatment is performed at 400°C for 6 h, to obtain a cathode electrode material Li_{1.05}Ni_{0.829}Co_{0.078}Mn_{0.03}Al_{0.04}B_{0.008}Al_{0.012}Zr_{0.003}, in the cathode electrode material, based on the quality of the cathode electrode material, the doping amounts of Al and Zr detected by ICP is shown in Table 1. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25° C and the DSC test temperature thereof are shown in Table 2.

### Embodiment 3

After a cathode electrode precursor material Ni_{0.85}Co_{0.08}Mn_{0.03}Al_{0.04}(OH)₂ is mixed with a boron source dopant B₂O₃ according to the mass ratio of 1:0.0015, pre-burning is performed at 900°C for 10 h, to obtain a pre-burned product; the pre-burned product is mixed with a lithium source LiOH and dopants Al₂O₃ and Zr(OH)₄ according to the mass ratio of 480:260:3.84:2.24, to obtain a mixed product; the mixed product is calcined at 830°C for 12 h, and a calcined product is water-washed and dried, to obtain a dried product; after the dried product is mixed with an aluminum source coating agent Al₂O₃ and a boron source coating agent B₂O₃ according to the mass ratio of 1:0.0012:0.0015, heat treatment is performed at 400°C for 6 h, to obtain a cathode electrode material Li_{1.05}Ni_{0.83}CO_{0.078}Mn_{0.029}Al_{0.04}B_{0.008}Al_{0.012}Zr_{0.002}, in the cathode electrode material, based on the quality of the cathode electrode material, the doping amounts of Al and Zr detected by ICP is shown in Table 1. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25° C and the DSC test temperature thereof are shown in Table 2.

### Embodiment 4

After a cathode electrode precursor material Ni_{0.85}Co_{0.08}Mn_{0.03}Al_{0.04}(OH)₂ is mixed with a boron source dopant B₂O₃ according to the mass ratio of 1:0.0018, pre-burning is performed at 930°C for 12 h, to obtain a pre-burned product; the pre-burned product is mixed with a lithium source LiOH and dopants Al₂O₃, Zr(OH)₄, and WO₃ according to the mass ratio of 480:270:3.84:3.52:0.416, to obtain a mixed product; the mixed product is calcined at 850°C for 14 h, and a calcined product is water-washed and dried, to obtain a dried product; after the dried product is mixed with an aluminum source coating agent Al₂O₃ and a boron source coating agent B₂O₃ according to the mass ratio of 1:0.0025:0.0025, heat treatment is performed at 450°C for 8 h, to obtain a cathode electrode material Li_{1.05}Ni_{0.826}Co_{0.078}Mn_{0.029}Al_{0.04}B_{0.01}Al_{0.014}Zr_{0.002}W_{0.0003}, in the cathode electrode material, based on the quality of the cathode electrode material, the doping amounts of Al, Zr and W detected by ICP is shown in Table 1, and Fig. 3 shows a corrected XRD spectrum of the obtained cathode electrode material. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25° C and the DSC test temperature thereof are shown in Table 2.

### Embodiment 5

After a cathode electrode precursor material Ni_{0.85}Co_{0.08}Mn_{0.03}Al_{0.04}(OH)₂ is mixed with a boron source dopant B₂O₃ according to the mass ratio of 1:0.0018, pre-burning is performed at 930°C for 12 h, to obtain a pre-burned product; the pre-burned product is mixed with a lithium source LiOH and dopants Al₂O₃, Zr(OH)₄, and WO₃ according to the mass ratio of 480:270:3.84:3.52:0.832, to obtain a mixed product; the mixed product is calcined at 850°C for 14 h, and a calcined product is water-washed and dried, to obtain a dried product; after the dried product is mixed with an aluminum source coating agent Al₂O₃ and a boron source coating agent B₂O₃ according to the mass ratio of 1:0.0025:0.0025, heat treatment is performed at 450°C for 8 h, to obtain a cathode electrode material Li_{1.05}Ni_{0.817}Co_{0.076}Mn_{0.029}Al_{0.04}B_{0.01}Al_{0.014}Zr_{0.002}W_{0.001}, in the cathode electrode material, based on the quality of the cathode electrode material, the doping amounts of Al, Zr and W detected by ICP is shown in Table 1. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25° C and the DSC test temperature thereof are shown in Table 2.

### Embodiment 6

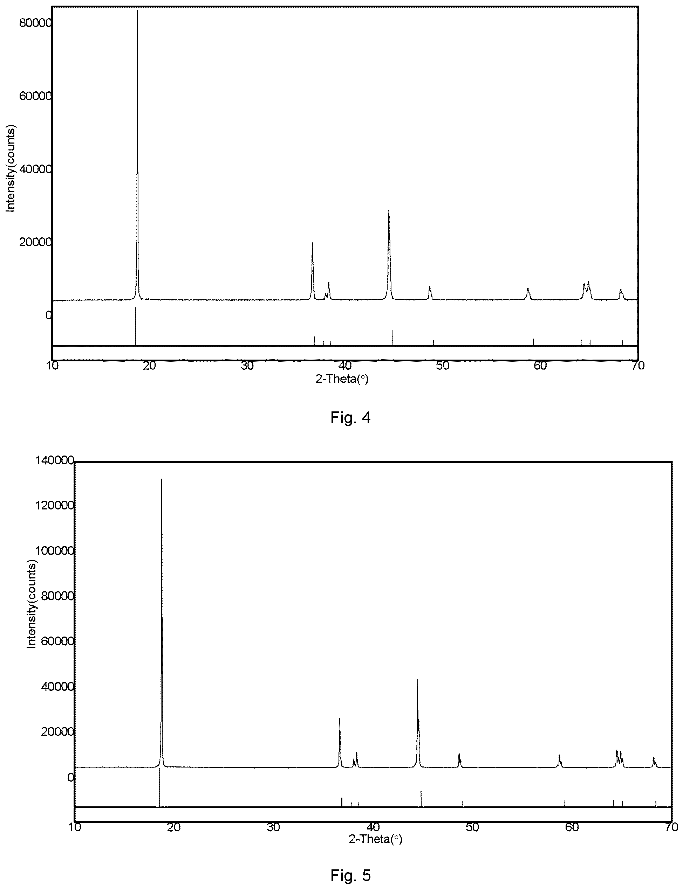

After a cathode electrode precursor material Ni_{0.85}CO_{0.08}Mn_{0.03}Al_{0.04}(OH)₂ is mixed with a boron source dopant B₂O₃ according to the mass ratio of 1:0.0018, pre-burning is performed at 930°C for 12 h, to obtain a pre-burned product; the pre-burned product is mixed with a lithium source LiOH and dopants Al₂O₃, Zr(OH)₄, and WO₃ according to the mass ratio of 480:270:6.5:3.52:0.416, to obtain a mixed product; the mixed product is calcined at 850°C for 14 h, and a calcined product is water-washed and dried, to obtain a dried product; after the dried product is mixed with an aluminum source coating agent Al₂O₃ and a boron source coating agent B₂O₃ according to the mass ratio of 1:0.0025:0.0025, heat treatment is performed at 450°C for 8 h, to obtain a cathode electrode material Li_{1.05}Ni_{0.808}Co_{0.076}Mn_{0.029}Al_{0.04}B_{0.01}Al_{0.034}Zr_{0.002}W_{0.0003}, in the cathode electrode material, based on the quality of the cathode electrode material, the doping amounts of Al, Zr and W detected by ICP is shown in Table 1, and Fig. 4 shows a corrected XRD spectrum of the obtained cathode electrode material. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25° C and the DSC test temperature thereof are shown in Table 2.

### Embodiment 7

After a cathode electrode precursor material Ni_{0.85}CO_{0.08}Mn_{0.03}Al_{0.04}(OH)₂ is mixed with a boron source dopant B₂O₃ according to the mass ratio of 1:0.002, pre-burning is performed at 980°C for 14 h, to obtain a pre-burned product; the pre-burned product is mixed with a lithium source LiOH and dopants Al₂O₃, Zr(OH)₄, and WO₃ according to the mass ratio of 480:280:7:3.52:0.416, to obtain a mixed product; the mixed product is calcined at 880°C for 16 h, and a calcined product is water-washed and dried, to obtain a dried product; after the dried product is mixed with an aluminum source coating agent Al₂O₃ and a boron source coating agent B₂O₃ according to the mass ratio of 1:0.003:0.0065, heat treatment is performed at 500°C for 8 h, to obtain a cathode electrode material Li_{1.05}Ni_{0.805}Co_{0.076}Mn_{0.029}Al_{0.04}B_{0.01}Al_{0.037}Zr_{0.002}W_{0.0003}, in the cathode electrode material, based on the quality of the cathode electrode material, the doping amounts of Al, Zr and W detected by ICP is shown in Table 1. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-week cycle data at 25° C and the DSC test temperature thereof are shown in Table 2.

### Embodiment 8

After a cathode electrode precursor material Ni_{0.85}Co_{0.08}Mn_{0.03}Al_{0.04}(OH)₂ is mixed with a boron source dopant B₂O₃ according to the mass ratio of 1:0.002, pre-burning is performed at 980°C for 14 h, to obtain a pre-burned product; the pre-burned product is mixed with a lithium source LiOH and dopants Al₂O₃, Zr(OH)₄, and WO₃ according to the mass ratio of 480:280:7.5:3.52:0.416, to obtain a mixed product; the mixed product is calcined at 880°C for 16 h, and a calcined product is water-washed and dried, to obtain a dried product; after the dried product is mixed with an aluminum source coating agent Al₂O₃ and a boron source coating agent B₂O₃ according to the mass ratio of 1:0.003:0.0065, heat treatment is performed at 500°C for 8 h, to obtain a cathode electrode material Li_{1.05}Ni_{0.803}Co_{0.076}Mn_{0.028}Al_{0.04}B_{0.01}Al_{0.04}Zr_{0.002}W_{0.0003}, in the cathode electrode material, based on the quality of the cathode electrode material, the doping amounts of Al, Zr and W detected by ICP is shown in Table 1, and Fig. 5 shows a corrected XRD spectrum of the obtained cathode electrode material. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25°C and the DSC test temperature thereof are shown in Table 2.

### Embodiment 9

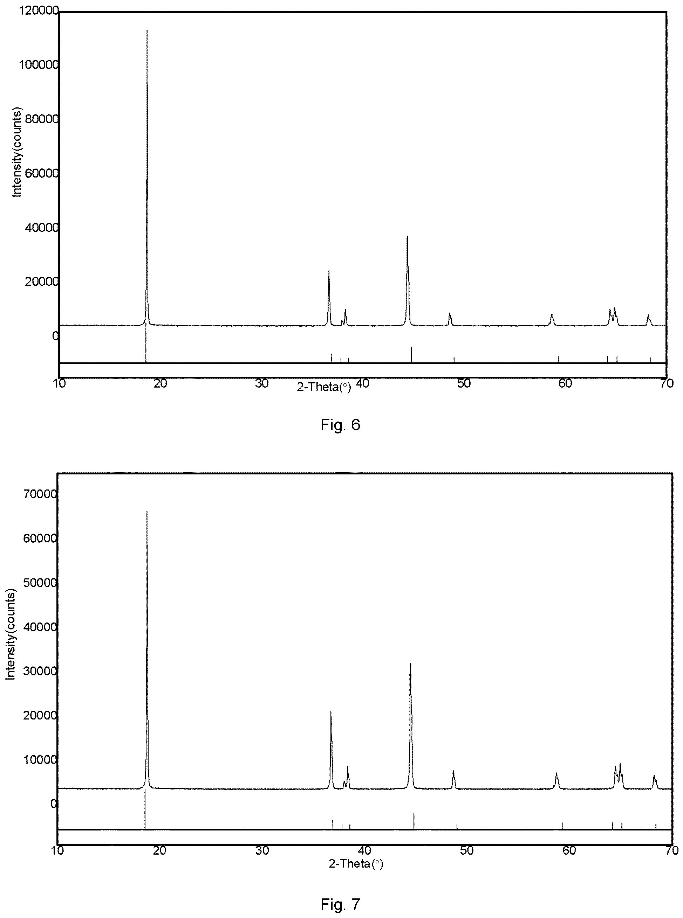

After a cathode electrode precursor material Ni_{0.85}Co_{0.08}Mn_{0.03}Al_{0.04}(OH)₂ is mixed with a boron source dopant B₂O₃ according to the mass ratio of 1:0.002, pre-burning is performed at 980°C for 14 h, to obtain a pre-burned product; the pre-burned product is mixed with a lithium source LiOH and dopants Al₂O₃, Zr(OH)₄, and WO₃ according to the mass ratio of 480:280:8:3.52:0.416, to obtain a mixed product; the mixed product is calcined at 880°C for 16 h, and a calcined product is water-washed and dried, to obtain a dried product; after the dried product is mixed with an aluminum source coating agent Al₂O₃ and a boron source coating agent B₂O₃ according to the mass ratio of 1:0.003:0.0065, heat treatment is performed at 500°C for 8 h, to obtain a cathode electrode material Li_{1.05}Ni_{0.797}Co_{0.075}Mn_{0.028}Al_{0.04}B_{0.01}Al_{0.047}Zr_{0.002}W_{0.0003}, in the cathode electrode material, based on the quality of the cathode electrode material, the doping amounts of Al, Zr and W detected by ICP is shown in Table 1, and Fig. 6 shows a corrected XRD spectrum of the obtained cathode electrode material. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25°C and the DSC test temperature thereof are shown in Table 2.

### Embodiment 10

After a cathode electrode precursor material Ni_{0.85}Co_{0.08}Mn_{0.03}Al_{0.04}(OH)₂ is mixed with a boron source dopant B₂O₃ according to the mass ratio of 1:0.002, pre-burning is performed at 980°C for 14 h, to obtain a pre-burned product; the pre-burned product is mixed with a lithium source LiOH and dopants Al₂O₃, Zr(OH)₄, and WO₃ according to the mass ratio of 480:280:7:3.52:0.416, to obtain a mixed product; the mixed product is calcined at 880°C for 16 h, and a calcined product is water-washed and dried, to obtain a dried product; after the dried product is mixed with an aluminum source coating agent Al₂O₃ and a boron source coating agent B₂O₃ according to the mass ratio of 1:0.003:0.0065, heat treatment is performed at 500°C for 8 h, to obtain a cathode electrode material Li_{1.05}Ni_{0.809}Co_{0.063}Mn_{0.04}Al_{0.04}B_{0.01}Al_{0.037}Zr_{0.002}W_{0.0003}, in the cathode electrode material, based on the quality of the cathode electrode material, the doping amounts of Al, Zr and W detected by ICP is shown in Table 1. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25°C and the DSC test temperature thereof are shown in Table 2.

### Embodiment 11

After a cathode electrode precursor material Ni_{0.85}Co_{0.08}Mn_{0.03}Al_{0.04}(OH)₂ is mixed with a boron source dopant B₂O₃ according to the mass ratio of 1:0.002, pre-burning is performed at 980°C for 14 h, to obtain a pre-burned product; the pre-burned product is mixed with a lithium source LiOH and dopants Al₂O₃, Zr(OH)₄, and WO₃ according to the mass ratio of 480:285:8:3.52:1.248, to obtain a mixed product; the mixed product is calcined at 880°C for 16 h, and a calcined product is water-washed and dried, to obtain a dried product; after the dried product is mixed with an aluminum source coating agent Al₂O₃ and a boron source coating agent B₂O₃ according to the mass ratio of 1:0.003:0.0065, heat treatment is performed at 500°C for 8 h, to obtain a cathode electrode material Li_{1.08}Ni_{0.775}Co_{0.077}Mn_{0.058}Al_{0.04}B_{0.01}Al_{0.047}Zr_{0.002}W_{0.001}, in the cathode electrode material, based on the quality of the cathode electrode material, the doping amounts of Al, Zr and W detected by ICP is shown in Table 1. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25°C and the DSC test temperature thereof are shown in Table 2.

### Contrast example

After a cathode electrode precursor material Ni_{0.85}Co_{0.08}Mn_{0.03}Al_{0.04}(OH)₂ is mixed with a boron source dopant B₂O₃ according to the mass ratio of 1:0.0015, pre-burning is performed at 900°C for 10 h, to obtain a pre-burned product; the pre-burned product is mixed with a lithium source LiOH according to the mass ratio of 150:94, to obtain a mixed product; the mixed product is calcined at 830°C for 12 h, and a calcined product is water-washed and dried, to obtain a dried product; after the dried product is mixed with an aluminum source coating agent Al₂O₃ and a boron source coating agent B₂O₃ according to the mass ratio of 1:0.0012:0.0015, heat treatment is performed at 400°C for 6 h, to obtain a cathode electrode material Li_{1.05}Ni_{0.835}Co_{0.079}Mn_{0.03}Al_{0.04}B_{0.008}Al_{0.006}. Fig. 7 shows a corrected XRD spectrum of the obtained cathode electrode material. The half-width of a (003) diffraction peak of the cathode electrode material of which a 2θ angle is around 18.74 degrees, the ratio of the half-width of the (003) diffraction peak of which the 2θ angle is around 18.74 degrees to the half-width of a (104) diffraction peak of which the 2θ angle is around 44.4 degrees, the ratio of the intensity of the (003) diffraction peak to the intensity of the (104) diffraction peak, 50-times cycle data at 25°C and the DSC test temperature thereof are shown in Table 2.

**Table 1: Content of doping elements in cathode electrode materials obtained in Embodiments 1-11 and Contrast example**

| | Designed doping amount (ppm) | | | | Measured doping amount (ppm) | | | |
|---|---|---|---|---|---|---|---|---|
| | B | Al | Zr | W | B | Al | Zr | W |
| Contrast example | 450 | 0 | 0 | 0 | 423 | 21 | 21 | 21 |
| Embodiment 1 | 450 | 3000 | 0 | 0 | 467 | 3200 | 56 | 6 |
| Embodiment 2 | 450 | 3000 | 3000 | 0 | 412 | 3156 | 2875 | 12 |
| Embodiment 3 | 450 | 3000 | 2000 | 0 | 456 | 3025 | 2658 | 16 |
| Embodiment 4 | 500 | 3000 | 3000 | 500 | 478 | 3098 | 2787 | 523 |
| Embodiment 5 | 500 | 3000 | 3000 | 1000 | 489 | 3254 | 2569 | 1211 |
| Embodiment 6 | 500 | 6000 | 3000 | 500 | 488 | 6300 | 2669 | 463 |
| Embodiment 7 | 600 | 8000 | 3000 | 500 | 621 | 7869 | 2788 | 498 |
| Embodiment 8 | 600 | 10000 | 3000 | 500 | 598 | 9887 | 2698 | 475 |
| Embodiment 9 | 600 | 12000 | 3000 | 500 | 610 | 12352 | 2741 | 479 |
| Embodiment 10 | 600 | 8000 | 3000 | 500 | 623 | 7971 | 2863 | 465 |
| Embodiment 11 | 600 | 12000 | 3000 | 1500 | 567 | 11856 | 2789 | 1487 |

| | | | | | | | | |
|---|---|---|---|---|---|---|---|---|
| Note: The doping amount of Al is determined as follows: the amount of doped B and the content of Al in the product after pre-burning are detected by ICP; and the content of Al in the product after drying is measured by ICP, a difference between two times of the Al contents is the doping amount of Al. | | | | | | | | |

The measured doping amount in the table exceeds the designed doping amount because the cathode electrode precursor material originally contains a small amount of a doping element.

**Table 2: Test data of cathode electrode materials obtained in Embodiments 1-11 and Contrast example**

| | Peak half-width (°) | | Peak-to-strength ratio I₀₀₃/I₁₀₄ | 50-times cycle (25°C)/% | DSC/°C |
|---|---|---|---|---|---|
| | (003) | (104)/(003) | | | |
| Contrast example | 0.0814 | 1.6175 | 2.2951 | 90.11 | 208 |
| Embodiment 1 | 0.0753 | 1.5894 | 2.4587 | 92.18 | 210.58 |
| Embodiment 2 | 0.0671 | 1.5537 | 2.4751 | 94.46 | 215.18 |
| Embodiment 3 | 0.0686 | 1.5721 | 2.4645 | 93.58 | 213.95 |
| Embodiment 4 | 0.0665 | 1.5247 | 2.5482 | 95.61 | 223.49 |
| Embodiment 5 | 0.0679 | 1.5518 | 2.4819 | 94.58 | 227.93 |
| Embodiment 6 | 0.0654 | 1.4969 | 2.7980 | 97.58 | 228.73 |
| Embodiment 7 | 0.0622 | 1.4868 | 2.8196 | 98.15 | 237.72 |
| Embodiment 8 | 0.0602 | 1.4751 | 2.9762 | 99.81 | 246.79 |
| Embodiment 9 | 0.0611 | 1.4962 | 2.8452 | 96.72 | 244.49 |
| Embodiment 10 | 0.0646 | 1.4925 | 2.8049 | 98.06 | 234.65 |
| Embodiment 11 | 0.0582 | 1.4656 | 2.8567 | 98.25 | 231.68 |

It may be seen from Table 1 and Table 2 that the cathode electrode material synthesized in the embodiments of the present disclosure is doped with the M ions and coated with B, the cathode electrode material with the high cycle retention rate and high DSC temperature may be obtained, namely the cathode electrode material with the long cycle and good thermal stability is obtained. In combination with the XRD diffraction data in Table 2, it may be seen that co-doping in a suitable ratio may be adopted in Embodiments 1-11 so that the half-width of the (003) diffraction peak is 0.0550-0.0800, the ratio of the half-width of the (104) diffraction peak to the half-width of the (003) diffraction peak is 1.4500-1.6000, and the ratio of the diffraction peak intensity of I₀₀₃ to I₁₀₄ is 2.45≤I₀₀₃/I₁₀₄≤3.00. Further, the 50-times cycle (25°C) test data in Table 2 also proves that the cathode electrode material obtained in Embodiments 1-11 has the long cycle life and high thermal stability.

In descriptions of the description, the descriptions with reference to terms "one embodiment", "some embodiments", "example", "specific example", or "some examples" and the like mean that specific features, structures, materials or characteristics described in combination with the embodiments or examples are included in at least one embodiment or example of the present disclosure. In the description, the schematic representations of the above terms do not necessarily refer to the same embodiment or example. Moreover, the described specific features, structures, materials or characteristics may be combined in any one or more embodiments or examples in a suitable manner. In addition, those skilled in the art may integrate and combine the different embodiments or examples and the features of the different embodiments or examples described in the description without contradicting each other.

Although the embodiments of the present disclosure are already shown and described above, it may be understood that the above embodiments are exemplary, and should not be construed as limiting the present disclosure. Those of ordinary skill in the art may perform changes, modifications, substitutions, and deformations on the above embodiments within a scope of the present disclosure.

## Claims

1. A cathode electrode material, a general formula thereof is LiₐNi_{1-x-y-z}CoₓMn_{y}Al_{z}M_{b}O₂, wherein 1.04≤a≤1.08, 0.04≤x≤0.08, 0.025≤y≤0.06, 0.03≤z≤0.09, 0.015≤b≤0.06, and M is B and at least one selected from Zr, Al, Ti, Mg, Na, Ca, Nb, Ba, Si, P, W, and Sr.

2. The cathode electrode material according to claim 1, wherein 0.028≤y≤0.06, preferably 0.04≤y≤0.06; preferably 1.04≤a≤1.05, preferably 0.075≤x≤0.08; preferably 0.03≤z≤0.04; and preferably 0.02≤b≤0.05.

3. The cathode electrode material according to claim 1 or 2, wherein the value range of the b is 0.02≤b≤0.03.

4. The cathode electrode material according to claim 1 or 2, wherein the cathode electrode material has an α-NaFeO₂-type layered structure similar to LiCoO₂, and the crystal type of the cathode electrode material belongs to a R-3m space group of a hexagonal crystal system.

5. The cathode electrode material according to claim 1 or 2, wherein a 2θ angle of the cathode electrode material on the crystal plane (003) is around 18.74 degrees, and preferably the 2θ angle of the cathode electrode material on the crystal plane (003) is 18.74±0.2 degrees, and a half-width of a diffraction peak of the cathode electrode material on the crystal plane (003) is 0.0550-0.0700.

6. The cathode electrode material according to claim 5, wherein a 2θ angle of the cathode electrode material on the crystal plane (104) is around 44.4 degrees, and preferably the 2θ angle of the cathode electrode material on the crystal plane (104) is 44.4±0.2 degrees, and the ratio of the half-width of the diffraction peak of the cathode electrode material on the crystal plane (003) to the half-width of the diffraction peak on the crystal plane (104) is 1.45-1.6.

7. The cathode electrode material according to claim 6, wherein the ratio of the diffraction peak intensity of the cathode electrode material on the crystal plane (003) to the diffraction peak intensity on the crystal plane (104) is 2.45≤I₀₀₃/I₁₀₄≤3.05.

8. The cathode electrode material according to claim 1 or 2, wherein the M is B and at least one selected from Zr, Al, and W, preferably M is a combination of B, Zr, and Al, or a combination of B, Zr, Al, and W.

9. A method for preparing the cathode electrode material according to any one of claims 1-8, comprising:
mixing a cathode electrode precursor material with a boron source dopant, and then performing pre-burning;
mixing a pre-burned product with a lithium source and other dopants, wherein the other dopants are substances containing at least one of ion sources selected from Zr, Al, Ti, Mg, Na, Ca, Nb, Ba, Si, P, W, and Sr;
calcining a mixed product, and water-washing and drying a calcined product; and
mixing a dried product with an aluminum source coating agent and a boron source coating agent, then performing heat treatment, as to obtain the cathode electrode material.

10. The method according to claim 9, wherein the cathode electrode precursor material is selected from at least one of Ni_{1-x-y-z}CoₓMn_{y}Al_{z}(OH)₂, and Ni_{1-x-y-z}CoₓMn_{y}Al_{z}CO₃, wherein 0.04≤x≤0.08, 0.04≤y≤0.06, 0.03≤z≤0.09; preferably 0.03≤y≤0.06, and more preferably 0.04≤y≤0.06;
preferably, the boron source dopant and the boron source coating agent are independently selected from at least one of B₂O₃ and H₃BO₃ respectively;
preferably, the mass ratio of the cathode electrode precursor material to the boron source dopant is 1:0.001-0.002;
preferably, the pre-burning temperature is 900-1000°C, and the pre-burning time is 10-15 h;
preferably, the mass ratio of the pre-burned product to the lithium source and the other dopants is 480:260-280:1-10;
preferably, the lithium source is selected from at least one of LiOH and Li₂CO₃;
preferably, the other dopants are selected from at least one of Zr(OH)₄, ZrO₂, Al₂O₃, TiO₂, Mg(OH)₂, NaCl, CaCI2, Nb₂O₅, BaCl₂, SiO₂, H₃PO₃, WO₃, and SrO;
preferably, the calcining temperature is 830-880°C, and the time is 12-17 h;
preferably, the mass ratio of the dried product to the aluminum source coating agent and the boron source coating agent is 1:0.001-0.003:0.0015-0.007;
preferably, the aluminum source coating agent is selected from at least one of Al₂O₃, Al(OH)₃, and AlF₃; and
preferably, the temperature of the heat treatment is 400-600°C, and the heat treatment time is 6-8 h.

11. A lithium-ion battery, comprising a cathode electrode material, wherein the cathode electrode material is the cathode electrode material according to any one of claims 1-8.

12. An automobile, the automobile has a lithium-ion battery, wherein the lithium-ion battery is the lithium-ion battery according to claim 11.
